Europäisches Patentamt

European Patent Office

Office européen des brevets

(19)

(11) **EP 1 271 111 A1**

(12) **EUROPÄISCHE PATENTANMELDUNG**

(43) Veröffentlichungstag:
02.01.2003 Patentblatt 2003/01

(51) Int Cl.⁷: **G01F 1/84**

(21) Anmeldenummer: **01114644.6**

(22) Anmeldetag: **19.06.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **Endress + Hauser Flowtec AG
CH-4153 Reinach BL 1 (CH)**

(72) Erfinder:
• **Rieder, Alfred Dr.
84032 Landshut (DE)**
• **Matt, Christian
4147 Aesch BL (CH)**
• **Drahm, Wolfgang
85435 Erding (DE)**

(54) **Erreger-Schaltung für Coriolis-Massedurchflussmesser**

(57)    Eine derartige Erregerschaltung ist für einen mit einer Zwei-Leiter-Prozesskontroll-Schleife verbundenen, allein davon mit Energie versorgten und allein darüber ein Messsignal abgebenden Coriolis-Massedurchflußmesser (10) vorgesehen. Dieser hat ein vibrierendes Meßrohr (1, 2) und eine Erregeranordnung (6) zu dessen Vibrierenlassen bei einer Schwingfrequenz, die gleich der momentanen mechanischen Resonanzfrequenz des Meßrohrs oder dieser benachbart ist. Ferner hat er entsprechende Sensorsignale erzeugende Sensoranordnungen (7, 8), die entlang des Meßrohrs voneinander beabstandet angeordnet sind. Die Erreger-Schaltung umfasst einen Spitzenwertdetektor (pd), dem als Eingangssignal eines der Sensorsignale zugeführt ist; sie hat ferner eine Stufe (sa), die eine Abweichung eines Ausgangssignal des Spitzenwertdetektors von einem einstellbaren Referenzsignal (Sr) ermittelt, das eine Amplitude der Vibration des Meßrohrs vorgibt; auch hat sie einen Multiplizierer (m) für das Eingangssignal des Spitzenwertdetektors (pd) und ein Ausgangssignal der Stufe (sa) sowie eine die Erregeranordnung speisende Endstufe (ps), von der ein Eingang mit einem Ausgang des Multiplizierers verbunden ist. Anstatt letzterem können ein Pulsdauermodulator (pm) oder ein Gleichspannungswandler (dc) und ein Komparator (kk) vorgesehen werden.

Fig. 5

**Beschreibung**

Die Erfindung betrifft Erreger-Schaltungen für mit einer Zwei-Leiter-Prozesskontroll-Schleife verbundene, allein davon mit Energie versorgte und allein darüber ein Messsignal abgebende Coriolis-Massedurchflußmesser. Im Folgenden wird ein derartiger Massedurchflußmesser als Zwei-Leiter-Massedurchflußmesser bezeichnet.

Coriolis-Massedurchflußmesser sind schon seit langem theoretisch beschrieben und auch in der heute marktgängigen Form seit ca. 25 Jahren bekannt. Diese noch heute übliche Form enthält einen mechanischen Aufnehmer, der mindestens ein gerades oder mindestens ein - in einer Ebene oder räumlich - gebogenes Meßrohr und eine zugeordnete Elektronik umfasst, das einlass- und auslass-seitig fixiert ist und das zwischen diesen Fixierungen im Betrieb zu Vibrationen erregt wird.

Die üblichen Massedurchflußmesser sind netzgespeiste Messgeräte und müssen hierfür mindestens zwei elektrische Zuleitungen, also Leiter haben. Das den Massedurchfluß repräsentierende, insb. das dazu proportionale, Messsignal wird entsprechend einem hierfür üblichen Standard, z.B. entsprechend dem zwischen 4 mA und 20 mA liegenden Strom-Standard, einem üblichen Frequenz-Standard oder einem digitalen Standard, erzeugt und abgegeben; hierfür sind zwei weitere Leiter erforderlich.

In der EP-A 10 94 307 ist die Möglichkeit, Coriolis-Massedurchflußmesser nur mit zwei Leitern auszurüsten, diese also als sogenannte Zwei-Leiter-Massedurchflußmesser auszubilden, eher am Rande und nur kurz erwähnt; auf dem Markt gibt es noch keine derartigen Zwei-Leiter-Massedurchflußmesser.

Wie der genannten EP-A ferner zu entnehmen ist, erzeugen Zwei-Leiter-Messgeräte als Messsignal einen Ausgangsstrom, dessen Momentanwerte ein mittels eines physikalischelektrischen Wandlers erzeugtes Wandlersignal möglichst proportional abbilden. Die beiden Leiter dienen sowohl für die Energiespeisung, wozu an die zwei Leiter von außen eine Gleichspannungsquelle anzulegen ist, als auch für die Übertragung des Messsignals.

Bei Zwei-Leiter-Messgeräten entsprechend dem erwähnten, zwischen 4 mA und 20 mA liegenden Strom-Standard, entspricht ein bestimmter Stromwert innerhalb dieses Strombereichs genau einem Messsignalwert. Lediglich der Strombereich unterhalb von 4 mA ist für die Energieversorgung der Elektronik des Zwei-Leiter-Messgeräts nutzbar. Dies bedingt, dass die Energieversorgung nur mit einer Leistung in der Größenordnung von 50 mW zur Verfügung steht, die im Folgenden als Klein-Leistung bezeichnet wird.

Zwei-Leiter-Messgeräte mit dem erwähnten, zwischen 4 mA und 20 mA liegenden Strom-Standard sind aufgrund dieser Sachverhalte besonders gut geeignet für den Einsatz in explosionsgefährdeter Umgebung.

Ferner sind Zwei-Leiter-Messgeräte häufig so ausgebildet, dass sie mit einem der üblichen Feldbusse zusammenarbeiten können. Dies kann einerseits durch direkten Anschluss an den Feldbus, z.B. entsprechend dem FIELDBUS-Protokoll, erfolgen (FIELDBUS ist eine eingetragene Marke der FIELDBUS FOUNDATION). Andererseits kann das Zusammenarbeiten unter Zwischenschaltung eines Buskopplers, z.B. entsprechend dem sogenannten HART-Protokoll, indirekt erfolgen (HART ist eine eingetragene Marke der HART User Group).

Die erwähnte Elektronik von Coriolis-Massedurchflußmessern umfasst eine Erreger-Schaltung und eine Auswerte-Schaltung. Die Erreger-Schaltung dient dem Vibrierenlassen des mindestens einen Meßrohrs, das vom zu messenden Fluid durchströmt wird.

Die Vibration erfolgt bei einer Schwingfrequenz, die gleich der momentanen mechanischen Resonanzfrequenz des Meßrohrs oder dieser benachbart ist; diese wird von der Dichte des Fluids mitbestimmt; die Dichte ihrerseits ist bekanntlich von der Temperatur des Fluids abhängig. Daher enthalten übliche Massedurchflußmesser auch mindestens einen Temperatur-Sensor.

Da mittels des vibrierenden Meßrohrs der Massedurchfluß - das ist bekanntlich die pro Zeiteinheit strömende Masse des Fluids - gemessen wird, erzeugt die Auswerte-Schaltung ein entsprechendes Messsignal.

Die erwähnte zur Verfügung stehende Kleinleistung muss ausreichen, die Erreger- und die Auswerte-Schaltung mit Energie zu versorgen. Als letztere eignet sich hierfür besonders die Auswerte-Schaltung der EP-A 10 59 515, die der US-Patent-Anmeldung 09/579,384 vom 20.Mai 2000 entspricht. Eine mit derart wenig Versorgungsenergie auskommende Erreger-Schaltung ist jedoch vom Stand der Technik noch nicht beschrieben worden.

Es ist daher eine Aufgabe der Erfindung, Zwei-Leiter-Coriolis-Massedurchflußmesser geeignete Erreger-Schaltungen anzugeben.

Zur Lösung dieser Aufgabe besteht eine erste Variante der Erfindung in einer Erreger-Schaltung für einen mit einer Zwei-Leiter-Prozesskontroll-Schleife verbundenen, allein davon mit Energie versorgten und allein darüber ein Messsignal abgebenden Coriolis-Massedurchflußmesser, der umfasst:

- mindestens ein vibrierendes Meßrohr,
- eine elektromechanische Erregeranordnung zum Vibrierenlassen des mindestens einen Meßrohrs bei einer Schwingfrequenz, die gleich der momentanen mechanischen Resonanzfrequenz des Meßrohrs oder dieser benachbart ist,
- eine ein erstes Sensorsignal erzeugende erste Sensoranordnung, und
- eine ein zweites Sensorsignal erzeugende zweite Sensoranordnung, welche Sensoranordnungen, entlang des Meßrohrs voneinander beabstandet angeordnet, dessen am Ort der jeweiligen Sensoranordnung auftretende Vibrationen erfassen,
- welche Erreger-Schaltung umfasst:

- einen Spitzenwertdetektor, dem als Eingangssignal eines der Sensorsignale bzw. deren Summe zugeführt ist,
- eine Stufe, die eine Abweichung eines Ausgangssignal des Spitzenwertdetektors von einem einstellbaren Referenzsignal ermittelt, das eine Amplitude der Vibration des Meßrohrs vorgibt,
- einen Multiplizierer für das Eingangssignal des Spitzenwertdetektors und für ein Ausgangssignal der Stufe sowie
- eine die Erregeranordnung speisende Endstufe, von der ein Eingang mit einem Ausgang des Multiplizierers verbunden ist.

Zur Lösung der genannten Aufgabe besteht eine zweite Variante der Erfindung in einer Erreger-Schaltung für einen mit einer Zwei-Leiter-Prozesskontroll-Schleife verbundenen, allein davon mit Energie versorgten und allein darüber ein Messsignal abgebenden Coriolis-Massedurchflußmesser, der umfasst:

- mindestens ein vibrierendes Meßrohr,
- eine elektromechanische Erregeranordnung zum Vibrierenlassen des mindestens einen Meßrohrs bei einer Schwingfrequenz, die gleich der momentanen mechanischen Resonanzfrequenz des Meßrohrs oder dieser benachbart ist,
- eine ein erstes Sensorsignal erzeugende erste Sensoranordnung, und
- eine ein zweites Sensorsignal erzeugende zweite Sensoranordnung, welche Sensoranordnungen, entlang des Meßrohrs voneinander beabstandet angeordnet, dessen am Ort der jeweiligen Sensoranordnung auftretende Vibrationen erfassen,
- welche Erreger-Schaltung umfasst:

- einen Spitzenwertdetektor, dem als Eingangssignal eines der Sensorsignale bzw. deren Summe zugeführt ist,
- eine Stufe, die eine Abweichung eines Ausgangssignal des Spitzenwertdetektors von einem einstellbaren Referenzsignal ermittelt, das eine Amplitude der Vibration des Meßrohrs vorgibt,
- einen Pulsdauermodulator, von dem

-- einem ersten Eingang das Eingangssignal des Spitzenwertdetektors und einem zweiten Eingang ein Ausgangssignal der Stufe zugeführt sind, sowie

- eine die Erregeranordnung speisende Endstufe, von der ein Eingang mit einem Ausgang des Pulsdauermodulators verbunden ist.

Zur Lösung der genannten Aufgabe besteht eine dritte Variante der Erfindung in einer Erreger-Schaltung für einen mit einer Zwei-Leiter-Prozesskontroll-Schleife verbundenen, allein davon mit Energie versorgten und allein darüber ein Messsignal abgebenden Coriolis-Massedurchflußmesser, der umfasst:

- mindestens ein vibrierendes Meßrohr,
- eine elektromechanische Erregeranordnung zum Vibrierenlassen des mindestens einen Meßrohrs bei einer Schwingfrequenz, die gleich der momentanen mechanischen Resonanzfrequenz des Meßrohrs oder dieser benachbart ist,
- eine ein erstes Sensorsignal erzeugende erste Sensoranordnung, und
- eine ein zweites Sensorsignal erzeugende zweite Sensoranordnung, welche Sensoranordnungen, entlang des Meßrohrs voneinander beabstandet angeordnet, dessen am Ort der jeweiligen Sensoranordnung auftretende Vibrationen erfassen,
- welche Erreger-Schaltung umfasst:

- einen Spitzenwertdetektor, dem als Eingangssignal eines der Sensorsignale bzw. deren Summe zugeführt ist,
- eine Stufe, die eine Abweichung eines Ausgangssignal des Spitzenwertdetektors von einem einstellbaren Referenzsignal ermittelt, das eine Amplitude der Vibration des Meßrohrs vorgibt,
- einen eingangsseitig mit einem Ausgang der Stufe verbundenen Gleichspannungswandler, der eine positive und eine negative, jeweils vom Ausgangssignal der Stufe abhängige Gleichspannung abgibt,
- einen eingangsseitig vom Eingangssignal des Spitzenwertdetektors gespeisten Komparator und
- eine die Erregeranordnung speisende Endstufe, von der ein Eingang mit einem Ausgang des Komparators verbunden ist und die von der positiven und der negativen Gleichspannung mit Energie versorgt ist.

Nach einer bevorzugten Ausgestaltung der ersten Variante der Erfindung umfasst die Endstufe:

- einen Operationsverstärker, der wie folgt beschaltet ist:

-- ein invertierender Eingang liegt über einen ersten Widerstand an einem Schaltungsnullpunkt,
-- ein nicht-invertierender Eingang liegt über einen zweiten Widerstand, der den gleichen Widerstandswert wie der erste Widerstand hat, am Ausgang des Multiplizierers,
-- ein Ausgang ist unter Zwischenschaltung eines dritten Widerstands mit einem ersten Pol einer Primärwicklung eines Transformators verbunden, von der ein zweiter Pol am Schaltungsnullpunkt liegt, welcher Transformator

--- eine mit der elektromechanischen Erregeranordnung verbundene Sekundärwicklung aufweist und
--- ein Strom-Aufwärts-Transformator ist,

-- der invertierende Eingang ist über einen vierten Widerstand mit dem Ausgang verbunden, und
-- der nicht-invertierende Eingang ist über einen fünften Widerstand, der den gleichen Widerstandswert wie der vierte Widerstand hat, am ersten Pol der Primärwicklung angeschlossen.

Nach einer bevorzugten Ausgestaltung der zweiten Variante der Erfindung umfasst die Endstufe eine komplementäre Gegentakt-Endstufe, die von einer konstanten positiven und einer konstanten negativen Gleichspannung mit Energie versorgt ist.

Nach einer bevorzugten Ausgestaltung der dritten Variante der Erfindung umfasst die Endstufe eine komplementäre Gegentakt-Endstufe, die von den vom Ausgangssignal der Stufe abhängigen Gleichspannungen mit Energie versorgt ist.

Nach einer ersten bevorzugten Ausgestaltung aller drei Varianten der Erfindung ist dem Spitzenwertdetektor ein Vorverstärker vorgeschaltet.

Nach einer zweiten bevorzugten Ausgestaltung aller drei Varianten der Erfindung ist das Ausgangssignal der Stufe über einen Verstärker, über einen integrierenden Verstärker oder über einen differenzierenden und integrierenden Verstärker dem Multiplizierer bzw. dem Pulsdauermodulator bzw. dem Komparator zugeführt.

Bei einem Coriolis-Massedurchflußmesser nach einer dritten bevorzugten Ausgestaltung aller drei Varianten der Erfindung führt die Zweidraht-Prozesskontroll-Schleife einen der Energieversorgung dienenden Gleichstrom; insb. ist das Messsignal ein Gleichstrom, bevorzugt in einem Bereich von 4 mA bis 20 mA, oder ein Digitalsignal, wobei der Coriolis-Massedurchflußmesser insb. mittels der Zweidraht-Prozesskontroll-Schleife an einem Feldbus angeschlossen ist.

Vorteile der Erfindung und sie selbst werden nun anhand der Figuren der Zeichnung näher erläutert, in der bevorzugte Ausführungsbeispiele dargestellt sind. Funktionsgleiche Teile sind in den einzelnen Figuren mit denselben Bezugszeichen versehen, jedoch sind diese Bezugszeichen in nachfolgenden Figuren nur dann wiederholt, wenn es sinnvoll erscheint.

Fig. 1 zeigt perspektivisch mechanische Einzelheiten eines zur Verwendung zusammen mit der Erfindung bevorzugten Massedurchflußaufnehmers ohne vervollständigtes Gehäuse,

Fig. 2 zeigt eine Vorderansicht des Massedurchflußaufnehmers entsprechend Fig. 1, wieder ohne vervollständigtes Gehäuse, jedoch mit zusätzlichen elektrischen Einzelheiten,

Fig. 3 zeigt im Schnitt entlang der Linie A-A von Fig. 2 eine Draufsicht von Fig. 2, nun jedoch mit vervollständigtem Gehäuse,

Fig. 4 zeigt im Schnitt entlang der Linie B-B von Fig. 2 eine Seitenansicht von Fig. 2, wieder mit vervollständigtem Gehäuse,

Fig. 5 zeigt teilweise nach Art eines Blockschaltbilds das Schaltbild eines Ausführungsbeispiels einer Erreger-Schaltung entsprechend der ersten Variante der Erfindung,

Fig. 6 zeigt teilweise nach Art eines Blockschaltbilds das Schaltbild eines Ausführungsbeispiels einer Erreger-Schaltung entsprechend der zweiten Variante der Erfindung,

Fig. 7 zeigt teilweise nach Art eines Blockschaltbilds das Schaltbild eines Ausführungsbeispiels einer Erreger-Schaltung entsprechend der dritten Variante der Erfindung,

Fig. 8 zeigt ein Schaltbild eines Ausführungsbeispiels einer bevorzugten Endstufe der Erregerschaltung nach Fig. 5,

Fig. 9 zeigt ein Schaltbild eines Ausführungsbeispiels einer bevorzugten Endstufe der Erregerschaltung nach Fig. 6 und

Fig. 10 zeigt ein Schaltbild eines Ausführungsbeispiels einer bevorzugten Endstufe der Erregerschaltung nach

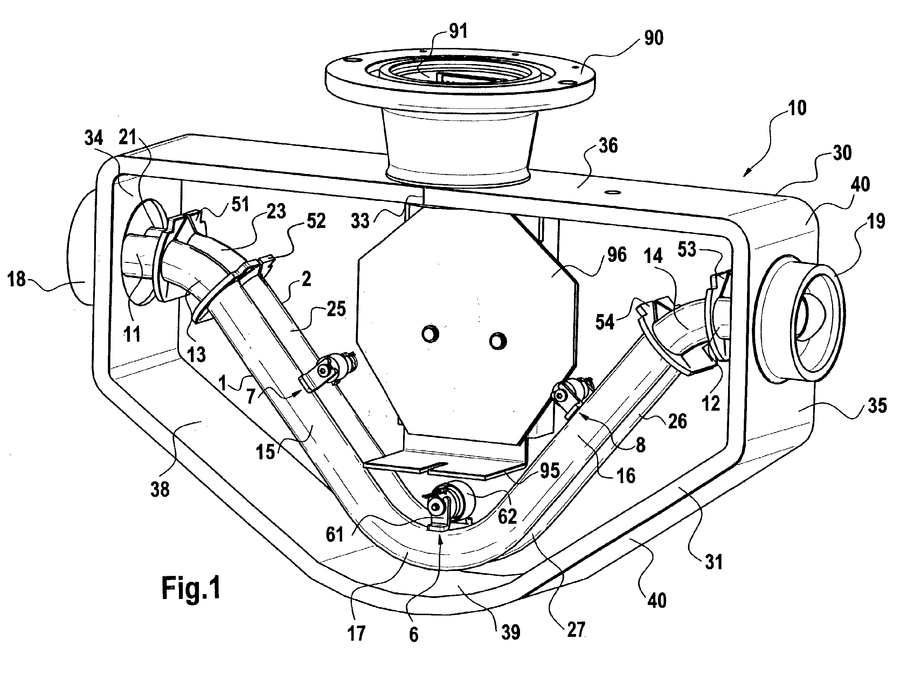

In Fig. 1 sind perspektivisch mechanische Einzelheiten eines für die Erfindung bevorzugt geeigneten Coriolis-Massedurchflußaufnehmers, der im Folgenden kurz als Aufnehmer 10 bezeichnet ist, dargestellt. Dieser Aufnehmer ist in der älteren EP-Anmeldung 00 11 0091.6 vom 12.05.2000 bereits beschrieben, die der US-Patent-Anmeldung 60/205,983 entspricht.

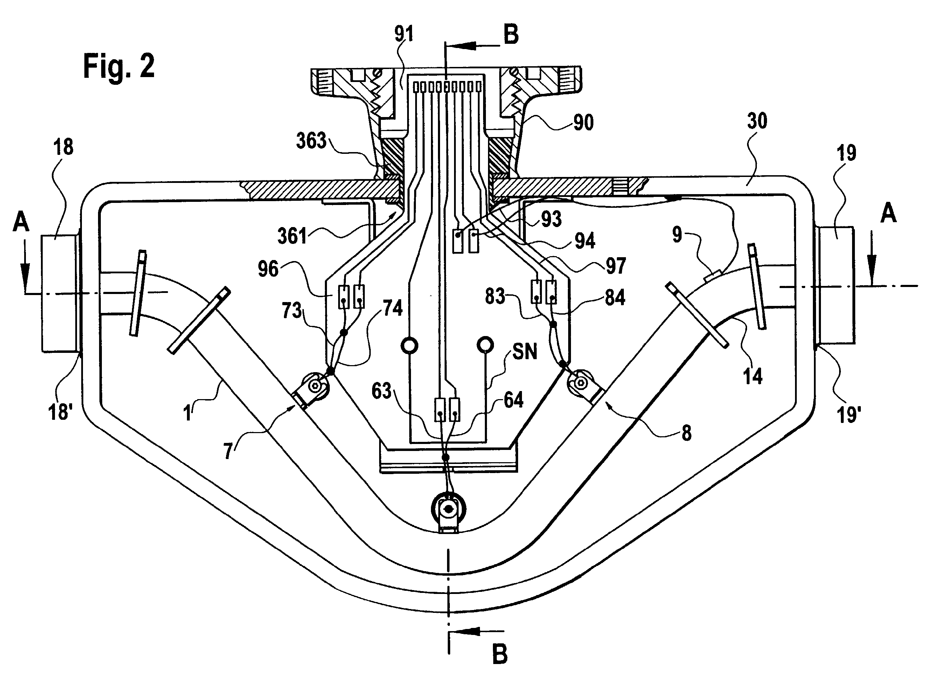

Aus Gründen der besseren Sichtbarkeit seines inneren Aufbaus ist in Fig. 1 das Gehäuse allerdings nicht vollständig zu sehen. Die Fig. 2 zeigt eine entsprechende Vorderansicht mit zusätzlichen elektrischen Einzelheiten.

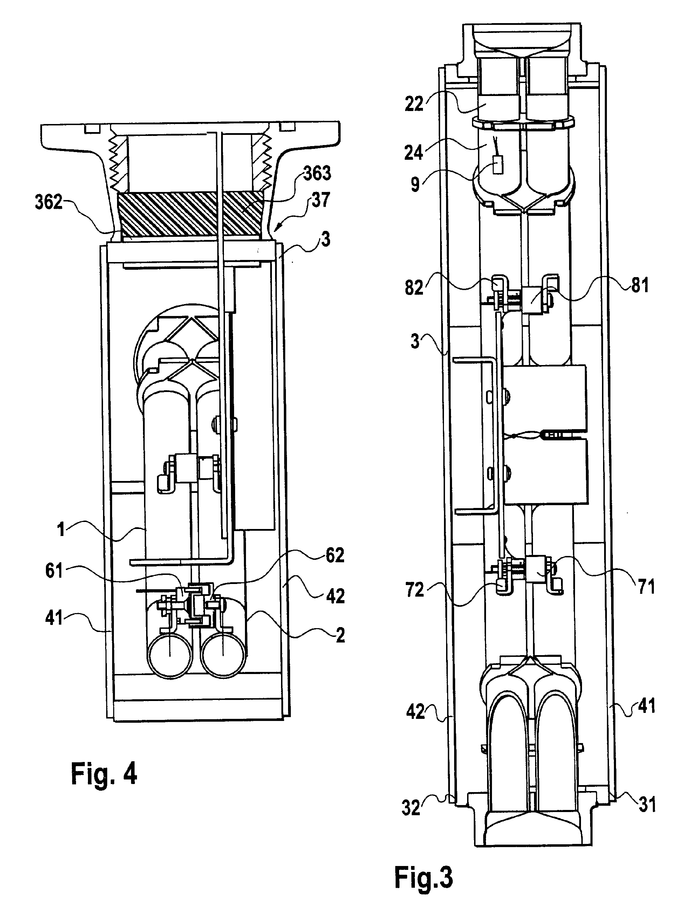

Demgegenüber zeigen die Fig. 3 und 4 zu der Fig. 2 gehörende Schnittansichten mit jeweils vervollständigtem Gehäuse. Wegen der gewählten Darstellung in Form einer perspektivischen Fig. 1 zusammen mit Auf-, Grund- und Seitenriss handelt die folgende Erläuterung nicht Figur für Figur hintereinander ab, sondern es werden die Figuren gemeinsam erörtert.

Der Aufnehmer 10 ist vom Benutzer in den Verlauf einer von einem zu messenden flüssigen, gasförmigen oder dampfförmigen Fluid durchströmten - aus Gründen der Übersichtlichkeit jedoch nicht dargestellten - Rohrleitung eines gegebenen Durchmessers, z.B. über Flansche 2, 3, einzusetzen ist. Anstatt mittels Flanschen kann der Aufnehmer 10 an die erwähnte Rohrleitung auch durch anderer bekannte Mittel angeschlossen werden, wie z.B. mittels Triclamp-Anschlüssen oder Schraubverbindungen.

Der Aufnehmer 10 weist ein in einer ersten Ebene V-förmig gebogenes erstes Meßrohr 1 auf, das bezüglich einer ersten Symmetrielinie symmetrisch gebogen ist. Ein V-förmig gebogenes zweites Meßrohr 2 ist in einer zweiten Ebene bezüglich einer zweiten Symmetrielinie symmetrisch gebogen. Die Meßrohre 1, 2 sind parallel zu einander angeordnet und jeweils einstückig ausgebildet.

Das Meßrohr 1 hat ein gerades Einlaßstück 11 mit einer in der ersten Ebene liegenden Einlaßachse, ein gerades Auslaßstück 12 mit einer in der ersten Ebene liegenden und mit der Einlaßachse fluchtenden Auslaßachse; somit ergibt sich eine gemeinsame Achse, die im Folgenden als Einlaß/Auslaßachse bezeichnet ist.

Das Meßrohr 2 hat ein gerades Einlaßstück 212 mit einer in der zweiten Ebene liegenden Einlaßachse, ein gerades Auslaßstück 22 (nur in Fig. 3 zu sehen) mit einer in der zweiten Ebene liegenden und mit der Einlaßachse fluchtenden Auslaßachse; auch diese gemeinsame Achse ist im Folgenden als Einlaß/Auslaßachse bezeichnet.

Das Meßrohr 1 hat ferner einen mit dem Einlaßstück 11 verbundenen Einlaßbogen 13, einen mit dem Auslaßstück 12 verbundenen Auslaßbogen 14, ein mit dem Einlaßbogen 13 verbundenes erstes gerades Rohrstück 15, ein mit dem Auslaßbogen 14 verbundenes zweites gerades Rohrstück 16 und einen mit den Rohrstücken 15, 16 verbundenen Scheitelbogen 17.

Das Meßrohr 2 hat ferner einen mit dem Einlaßstück 21 verbundenen Einlaßbogen 23, einen mit dem Auslaßstück 22 verbundenen Auslaßbogen 24 (nur in Fig. 3 zu sehen), ein mit dem Einlaßbogen 23 verbundenes erstes gerades Rohrstück 25, ein mit dem Auslaßbogen 24 verbundenes zweites gerades Rohrstück 26 und einen mit den Rohrstücken 25, 26 verbundenen Scheitelbogen 27. Die Biegung der Achse des Scheitelbogens 17 und die des Scheitelbogens 27 entsprechen praktisch einem Kreisbogen.

Die Einlaßstücke 11, 21 sind in einem Einlaß-Verteilerstück 18 und die Auslaßstücke 12, 22 sind in einem Auslaß-Verteilerstück 19 fixiert. Diese Verteilerstücke 18, 19 sind von einem Tragrahmen 30 gehaltert, der Teil eines Gehäuses 3 (nur in den Fig. 3 und 4 zu sehen) ist.

Die Meßrohre 1, 2 sowie die Verteilerstücke 18, 19 bestehen aus rostfreiem Stahl, wobei für die Meßrohre 1, 2 der rostfreie Stahl mit der europäischen Werkstoffnummer 1.4539, die der amerikanischen Bezeichnung 904 L entspricht, und für die Verteilerstücke 18, 19 der rostfreie Stahl mit der europäischen Werkstoffnummer 1.4404, die der amerikanischen Bezeichnung 316 L entspricht, verwendet ist.

Der Aufnehmer 10 ist in eine von einem zu messenden Fluid mindestens temporär durchströmte Rohrleitung einzusetzen. Hierzu werden entsprechend den Wünschen des Käufers des Aufnehmers 10 hersteller-seitig an das Einlaß- und das Auslaß-Verteilerstück 18, 19 Verbindungsvorrichtungen angebracht, wie z.B. Stutzen mit einem Außen- oder mit einem Innengewinde, Flansche oder Klemmvorrichtungen, wie sie z.B. unter der eingetragenen Marke Triclamp handelsüblich sind.

Ebenso wie die Meßrohre 1, 2 ist der Tragrahmen 30 einstückig ausgebildet und aus einem eine Vorderfläche 31 und eine Hinterfläche 32 (nur in den Fig. 3 und 4 zu sehen) aufweisenden Flach-Edelstahl von konstanter Breite und Dicke durch entsprechendes Biegen und Verschweißen der Enden, vgl. die Naht 33, hergestellt worden.

Der Tragrahmen 30 umfasst ein ebenes Einlaß-Rahmenstück 34, in dem das Einlaß-Verteilerstück 18 verschweißt ist, und ein ebenes Auslaß-Rahmenstück 35, in dem das Auslaß-Verteilerstück 19 verschweißt ist, vgl. in Fig. 2 die über den Tragrahmen 30 vorstehenden Teile der Verteilerstücke 18, 19 mit jeweils zugehöriger Schweißnaht 18', 19'.

Der Tragrahmen 30 umfasst ferner ein das Einlaß- und das Auslaß-Rahmenstück 34, 35 verbindendes, ebenes Durchführungs-Rahmenstück 36, in dem eine elektrische Durchführung 37 (nur in Fig. 4 zu sehen) druckdicht fixiert ist. Das Durchführungs-Rahmenstück 36 bildet mit dem Einlaß- und dem Auslaß-Rahmenstück 34, 35 jeweils einen rechten Winkel.

Der Tragrahmen 30 umfasst ferner ein an das Einlaß-Rahmenstück 34 unter einem Winkel angesetztes, ebenes erstes Ansatz-Rahmenstück 38, der etwa 120° beträgt. Der Tragrahmen 30 umfasst schließlich ein in das Ansatz-Rahmenstück 38 übergehendes, gebogenes Scheitel-Rahmenstück 39 und ein an das Auslaß-Rahmenstück 35 unter dem genannten Winkel angesetztes, in das Scheitel-Rahmenstück 39 übergehendes, ebenes zweites Ansatzstück 40.

Der Tragrahmen 30 ist durch ein auf die Vorderfläche 31 geschweißtes ebenes Vorderblech 41 aus rostfreiem Stahl und ein auf die Hinterfläche 32 geschweißtes ebenes Hinterblech 42 aus demselben Stahl zum Gehäuse 3 ergänzt, so dass es druckdicht ist. Vorder- und Hinterblech 41, 42 sind nur in den Fig. 3 und 4 zu sehen. Als Stahl für das Gehäuse 3 ist der rostfreie Stahl mit der europäischen Werkstoffnummer 1.4301 verwendet, die der amerikanischen Bezeichnung 304 entspricht.

Die ebenen Vorder- und Hinterbleche 41, 42 ergeben eine höhere Steifheit des Gehäuses 3 gegenüber einer Druckbeanspruchung in Richtung der Einlaß/Auslaßachse, als wenn diese Bleche mit Längssicken versehen würden.

Die Meßrohre 1, 2 sind mittels einer ersten Knotenplatte 51 in der Nähe einer Stelle starr miteinander verbunden, an der das jeweilige Einlaßstück 11, 21 in den jeweiligen Einlaßbogen 13, 23 übergeht, und mittels einer zweiten Knotenplatte 52 in der Nähe einer Stelle starr miteinander verbunden, an der der jeweilige Einlaßbogen 13, 23 in das jeweilige erste Rohrstück 15, 25 übergeht.

Die Meßrohre 1, 2 sind ferner mittels einer dritten Knotenplatte 53 in der Nähe einer Stelle starr miteinander verbunden, an der das jeweilige Auslaßstück 12, 22 in den jeweiligen Auslaßbogen 14, 24 übergeht, und mittels einer vierten Knotenplatte 54 in der Nähe einer Stelle starr miteinander verbunden, an der der jeweilige Auslaßbogen 14, 24 in das jeweilige zweite Rohrstück 16, 26 übergeht.

Die vier Knotenplatten 51, 52, 53, 54 sind dünne Scheiben aus rostfreien Stahl, wie er für das Gehäuse 3 verwendet wird. Diese Scheiben sind mit Bohrungen, deren AußenDurchmesser dem der Meßrohre 1, 2 entspricht, und mit Schlitzen versehen, so dass die Scheiben zunächst auf die Meßrohre 1, 2 aufgeklemmt und danach mit ihnen hartverlötet werden können; dabei werden auch die Schlitze miteinander hartverlötet, so dass die Scheiben ungeschlitzt als Knotenplatten auf den Meßrohren 1, 2 sitzen.

Eine Erregeranordnung 6 versetzt die Meßrohre 1, 2 im Betrieb in stimmgabel-artige Schwingungen, die wie üblich eine Schwingfrequenz haben, die gleich der mechanischen Resonanzfrequenz des von den Meßrohren 1, 2 gebildeten Schwingsystems ist oder die in der Nähe dieser Resonanzfrequenz liegt. Diese Schwingfrequenz ist im Betrieb bekanntlich von der Dichte des die Meßrohre 1, 2 durchströmenden Fluids abhängig. Daher kann aufgrund der Schwingfrequenz die Dichte des Fluids ermittelt werden. Da die Dichte bekanntlich von der Temperatur abhängt, wird auch diese gemessen, siehe unten.

Ein erster Teil 61 der Erregeranordnung 6 ist am Scheitelbogen 17 des Meßrohrs 1 im Bereich von dessen oben erwähnter Symmetrielinie und ein zweiter Teil 62 der Erregeranordnung 6 am Scheitelbogen 27 des Meßrohrs 2 im Bereich von dessen oben erwähnter Symmetrielinie fixiert, vgl. Fig. 4.

Die Erregeranordnung 6 ist eine elektrodynamische Erregeranordnung, und somit ist der Teil 61 eine Spulen-Anordnung und der Teil 62 eine Dauermagnet-Anordnung, die mit der Spulen-Anordnung durch Eintauchen zusammenwirkt.

Die Erregeranordnung 6 wird von einer nicht dargestellten Treiberschaltung mit Wechselenergie versorgt, die z.B. eine immer die momentane Resonanzfrequenz des Schwingsystems der Meßrohre 1, 2 einstellende PLL-Schaltung entsprechend der US-A 48 01 897 sein kann.

Ein erster Geschwindigkeits- oder Wegsensor 7 und ein zweiter Geschwindigkeits- oder Wegsensor 8, die symmetrisch bezüglich der genannten Symmetrielinien der Meßrohre 1, 2 daran fixiert sind, erzeugen Meßsignale, mittels denen der Massedurchfluß, die Dichte und, falls gewünscht, die Viskosität des Fluids auf übliche Art und Weise ermittelt werden können; dies liegt jedoch außerhalb des Rahmens der Erfindung.

Ein erster Teil 71 des Geschwindigkeits- oder Wegsensors 7 ist am Rohrstück 15 des Meßrohrs 1 und ein zweiter Teil 72 am Rohrstück 25 des Meßrohrs 2 fixiert, vgl. Fig. 3. Ein erster Teil 81 des Geschwindigkeits- oder Wegsensors 8 ist am Rohrstück 16 des Meßrohrs 1 und ein zweiter Teil 82 am Rohrstück 26 des Meßrohrs 2 fixiert, vgl. Fig. 3.

Die Geschwindigkeits- oder Wegsensoren 7, 8 sind hier elektrodynamische Geschwindigkeitssensoren; somit sind die Teile 71, 81 jeweils eine Spulen-Anordnung und die Teile 72, 82 jeweils eine Dauermagnet-Anordnung, die in die zugehörige Spulen-Anordnung eintauchen kann.

Wie oben bereits kurz erwähnt wurde, ist in den Tragrahmen 30 gegenüber den Scheitelbögen 17, 27 und somit auch gegenüber dem Scheitel-Rahmenstück 39 die mehrere elektrische Leiter aufweisende Durchführung 37 befestigt, insb. druckdicht eingesetzt. Hierzu ist am Tragrahmen 30 ein Flansch 90 befestigt, z.B. verschweißt. Der Flansch 90 hat eine Bohrung 91, so dass die Durchführung 37 von außerhalb des Gehäuses 3 zugänglich ist.

Die Durchführung 37 umfasst eine am Tragrahmen 30 mittels einer abgewinkelten Tragplatte 95 befestigte und zwischen diesem sowie den Scheitelbögen auf diese zulaufenden Leiterplatte 96. Darauf sind Leitbahnen angeordnet, vgl. die Leitbahn 97, die nur in Fig. 2 zu sehen sind.

An jeweils eine dieser Leitbahnen sind Anschluß-Leitungen 63, 64 der Erregeranordnung 6, Anschluß-Leitungen 73, 74 des Geschwindigkeitssensors 7, Anschluß-Leitungen 83, 84 des Geschwindigkeitssensors 8 und Anschluß-Leitungen 93, 94 eines Temperatursensors 9 und somit auch an die einzelnen Leiter der Durchführung 37 angeschlossen. Die Anschluß-Leitungen 63, 64, 73, 74, 83, 84, 93, 94 sind nur in Fig. 2 zu sehen. Zusätzlich ist auch eine Leitbahn für einen Schaltungsnullpunkt SN auf der Leiterplatte 96 vorgesehen, die über metallische, mit ihr mechanisch und daher auch elektrisch verbundene Befestigungsmittel an der metallischen Tragplatte 95 fixiert ist.

Der Temperatursensor 9 (nur in Fig. 2 und 3 zu sehen) ist auf dem Auslaßbogen 14 des Meßrohrs 1, z. B. durch Kleben, befestigt und ist z.B. ein Platin-Widerstand. Er dient, wie eingangs erwähnt, zum Messen der momentanen Temperatur des Fluids. Der Temperatursensor 9 kann auch an jeder geeigneten anderen Stelle der Meßrohre 1, 2 angeordnet werden.

Die Durchführung 37 umfasst ferner einen im Durchführungs-Rahmenstück 36 angebrachten Schlitz 361, durch den die Leiterplatte 96 gesteckt ist und der sich in den Flansch 90 hineinerstreckt, wobei zwischen Leiterplatte 96 und Schlitz 361 ein zu deren elektrischer Isolierung ausreichender Abstand eingehalten ist.

Ferner ist die Leiterplatte 96 durch eine auf dem Durchführung-Rahmenstück 36 bohrungsseitig aufliegende Scheibe 362 aus einem Isoliermaterial hindurchgesteckt. Eine isolierende Vergussmasse 363 füllt einen oberhalb der Scheibe 362 liegenden Teil der Bohrung 91 vollständig aus, wobei die Vergussmasse 363 auch mehr oder weniger in den Raum zwischen der Leiterplatte 96 und der Innenwand des Schlitzes 361 eingedrungen sein kann.

Die Dicke der Vergussmasse 363 in Richtung auf das offene Ende der Bohrung 91 ist mindestens gleich der Länge der für die Zündschutzart Ex-d nach den europäischen Standards EN 50 014 und EN 50 018 in Abhängigkeit von der Spaltbreite vorgeschriebenen Spaltlänge. Diesen Standards entsprechen vergleichbare Standards anderer Länder.

Die noch zu erläuternde Erreger-Schaltung ist mit der zugehörigen Auswerte-Schaltung in einem mit dem Flansch 90 verbundenen, nicht dargestellten Elektronik-Gehäuse untergebracht.

Anstatt des bevorzugten Aufnehmers der Fig. 1 bis 4 können andere, schon im Stand der Technik beschriebene Aufnehmer mit mindestens einem gebogenen Meßrohr zusammen mit der Erfindung verwendet werden, z.B. die Aufnehmer der US-A 53 94 758, der US-A 55 57 973, der US-A 56 75 093, der US-A 57 05 754, der US-A 57 96 011 oder der US-A 62 23 605.

Es können auch Aufnehmer mit mindestens einem geraden Meßrohr zusammen mit der Erfindung verwendet werden, z.B. die Aufnehmer der US-A 47 93 191, der US-A 53 51 561, der US-A 55 31 126, der US-A 56 02 345, der US-A 56 16 868, der US-A 57 36 653 oder der US-A 60 06 609.

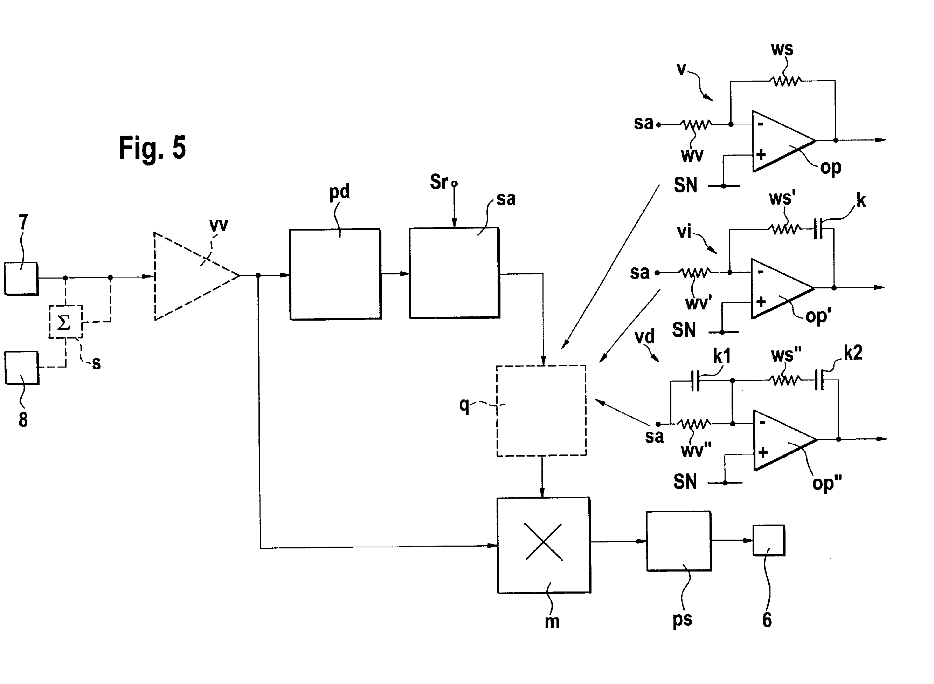

In Fig. 5 ist teilweise nach Art eines Blockschaltbilds das Schaltbild eines Ausführungsbeispiels einer Erreger-Schaltung entsprechend der ersten Variante der Erfindung dargestellt. Einem Spitzenwertdetektor pd ist als Eingangssignal eines der Sensorsignale bzw. deren Summe zugeführt. Somit ist der Spitzenwertdetektors pd eingangsseitig mit einem der Geschwindigkeits- oder Wegsensoren, die im Folgenden kurz als Sensoren bezeichnet sind, verbunden - in Fig. 5 ist das der Sensor 7.

Ein erster Eingang einer Stufe sa ist mit einem Ausgang des Spitzenwertdetektors pd verbunden; einem zweiten Eingang der Stufe sa ist ein einstellbares Referenzsignal Sr zugeführt, das eine Amplitude der Vibration der Meßrohre 1, 2 vorgibt. Die Stufe sa ermittelt eine Abweichung des Ausgangssignals des Spitzenwertdetektors pd vom Referenzsignal Sr.

Einem ersten Eingang eines Multiplizierers m ist das Eingangssignal des Spitzenwertdetektors pd und einem zweiten Eingang das Ausgangssignal der Stufe sa zugeführt. Der Multiplizierer m wirkt als Amplitudenmodulator. Dabei ist ein Sensorsignal bzw. die Summe der beiden Sensorsignale - bzw. ein dazu jeweils proportionales Signal, s.u. - das Trägersignal und das Ausgangssignal der Stufe sa das Modulationssignal, das - immerhin langsam - veränderlich ist; es stellt die Abweichung der momentanen Vibrationsamplitude des Meßrohrs bzw. der Meßrohre 1, 2 von dessen bzw. deren durch das Referenzsignal Sr repräsentierten Soll-Vibrationsamplitude dar.

Mit einem Ausgang des Multiplizierers m ist eingangsseitig eine Endstufe ps verbunden, die ausgangsseitig die Erregeranordnung 6 speist.

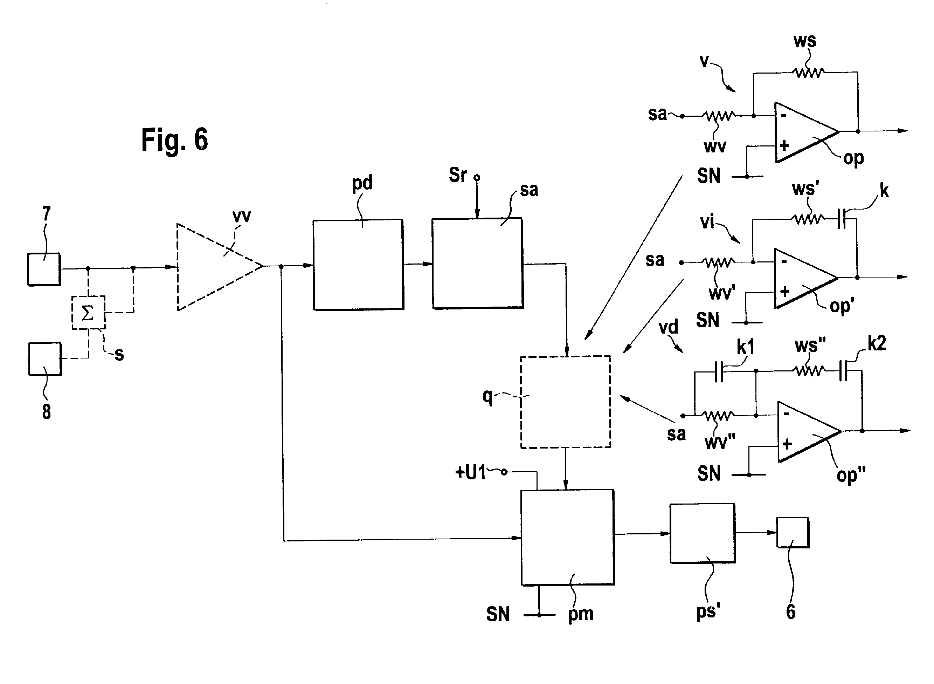

In Fig. 6 ist teilweise nach Art eines Blockschaltbilds das Schaltbild eines Ausführungsbeispiels einer Erreger-Schaltung entsprechend der zweiten Variante der Erfindung dargestellt. Das Ausführungsbeispiel der Fig. 6 unterscheidet sich von dem der Fig. 5 dadurch, dass anstatt von deren Multiplizierer m ein Pulsdauermodulator pm vorgesehen ist; dieser ist an einer konstanten positiven ersten Gleichspannung +U1 betrieben und liegt am Schaltungsnullpunkt SN.

Einem ersten Eingang des Pulsdauermodulators pm - das ist der Trägersignal-Eingang - ist das Eingangssignal des Spitzenwertdetektors pd zugeführt. Somit ist dieser erste Eingang mit einem der Sensoren verbunden - in Fig. 6 ist das wieder der Sensor 7.

Einem zweiten Eingang des Pulsdauermodulators pm - das ist der Modulationssignal-Eingang - ist das Ausgangssignal der Stufe sa zugeführt. Der Ausgang des Pulsdauermodulators pm ist mit dem Eingang einer Endstufe ps' verbunden, die ausgangsseitig die Erregeranordnung 6 speist.

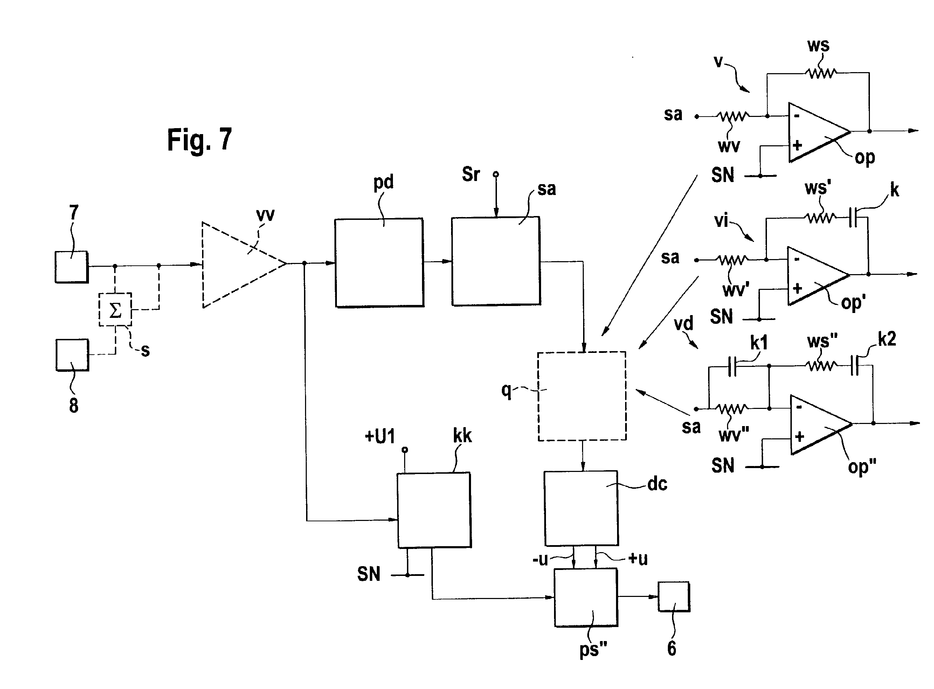

In Fig. 7 ist teilweise nach Art eines Blockschaltbilds das Schaltbild eines Ausführungsbeispiels einer Erreger-Schaltung entsprechend der dritten Variante der Erfindung dargestellt. Das Ausführungsbeispiel der Fig. 7 unterscheidet sich von dem der Fig. 5 dadurch, dass anstatt von deren Multiplizierer m ein Komparator kk und ein Gleichspannungswandler dc vorgesehen sind, der eine positive Gleichspannung +u und eine negative Gleichspannung -u abgibt; diese Gleichspannungen sind jeweils vom Ausgangssignal der Stufe sa abhängig und daher als nichtkonstant zu betrachten. Der Komparator kk ist an der konstanten positiven ersten Gleichspannung +U1 betrieben und liegt am Schaltungsnullpunkt SN.

Einem Eingang des Komparators kk ist das Eingangssignal des Spitzenwertdetektors pd zugeführt. Somit ist der Komparator kk eingangsseitig mit einem der Sensoren verbunden - in Fig. 7 ist das wieder der Sensor 7.

Einem Steuer-Eingang des Gleichspannungswandlers dc ist das Ausgangssignal der Stufe sa zugeführt. Eine Endstufe ps" ist eingangsseitig mit dem einen Ausgang des Komparators kk verbunden, die mittels der vom Gleichspannungswandler dc erzeugten Gleichspannungen +u, -u mit Energie versorgt ist und die Erregeranordnung 6 speist.

In den Fig. 5 bis 7 ist jeweils gestrichelt angedeutet, dass anstatt eines der Sensorsignale der Sensoren 7, 8 auch deren Summe dem Spitzenwertdetektor pd und dem Multiplizierer m bzw. dem Pulsdauermodulator pm bzw. dem Komparator kk zugeführt werden kann; dann sind diese Sensorsignale über einen Summierer s zu führen.

In den Fig. 5 bis 7 sind weitere gestrichelt gezeichnete Teilschaltungen zu sehen, die bevorzugte Weiterbildungen der Erfindung darstellen. Eine erste solche Weiterbildung ist ein Vorverstärker vv, der dem Spitzenwertdetektor pd vorgeschaltet ist.

Eine zweite Weiterbildung ist ein Verstärker v, der das Ausgangssignal der Stufe sa verstärkt, bevor es zum Multiplizierer m gelangt. Ein solcher Verstärker kann ein Operationsverstärker op sein, dessen nicht-invertierender Eingang am Schaltungsnullpunkt SN liegt, dessen invertierender Eingang über einen Vorwiderstand wv mit dem Ausgang der Stufe sa und über einen Shuntwiderstand ws mit dem Verstärker-Ausgang verbunden ist. Der derart beschaltete Operationsverstärker op ist jeweils rechts oben in den Fig. 5 bis 7 zu sehen.

Eine dritte Weiterbildung ist ein integrierender Verstärker vi, der das Ausgangssignal der Stufe sa verstärkt und integriert, bevor es zum Multiplizierer m gelangt. Ein solcher Verstärker kann ein Operationsverstärker op' sein, dessen nicht-invertierender Eingang am Schaltungsnullpunkt SN liegt, dessen invertierender Eingang über einen Vorwiderstand wv' mit dem Ausgang der Stufe sa und über eine Serienschaltung aus einen Shuntwiderstand ws' und einem Kondensator k mit dem Verstärker-Ausgang verbunden ist. Der derart beschaltete Operationsverstärker op' ist jeweils rechts in der Mitte der Fig. 5 bis 7 zu sehen.

Eine vierte Weiterbildung ist ein differenzierender und integrierender Verstärker vd, der das Ausgangssignal der Stufe sa verstärkt, differenziert und integriert, bevor es zum Multiplizierer m gelangt. Ein solcher Verstärker kann ein Operationsverstärker op" sein, dessen nicht-invertierender Eingang am Schaltungsnullpunkt SN liegt, dessen invertierender Eingang über eine Parallelschaltung eines Vorwiderstands wv" und eines ersten Kondensators k1 mit dem Ausgang der Stufe sa und über eine Serienschaltung aus einen Shuntwiderstand ws" und einem zweiten Kondensator k2 mit dem Verstärker-Ausgang verbunden ist. Der derart beschaltete Operationsverstärker op" ist jeweils rechts unten in den Fig. 5 bis 7 zu sehen.

Mittels der Pfeile ist in den Fig. 5 bis 7 angedeutet, dass der jeweilige Verstärker v, vi, vd an die Stelle des gestrichelt gezeichneten Quadrats q zu setzen ist, das zwischen dem Ausgang der Stufe sa und dem zweiten Eingang des Multiplizieres m liegt.

Es liegt im Rahmen der Erfindung, dass die Funktionen der einzelnen Teilschaltungen der Fig. 5 bis 7 durch entsprechende analoge oder digitale Teilschaltungen realisiert werden, in letzterem Fall also z.B. mittels eines geeignet programmierten Mikroprozessors, wobei die diesem zuzuführenden Signale zuvor einer Analog/Digital-Wandlung und dessen Ausgangssignale gegebenenfalls einer Digital/Analog-Wandlung zu unterziehen sind.

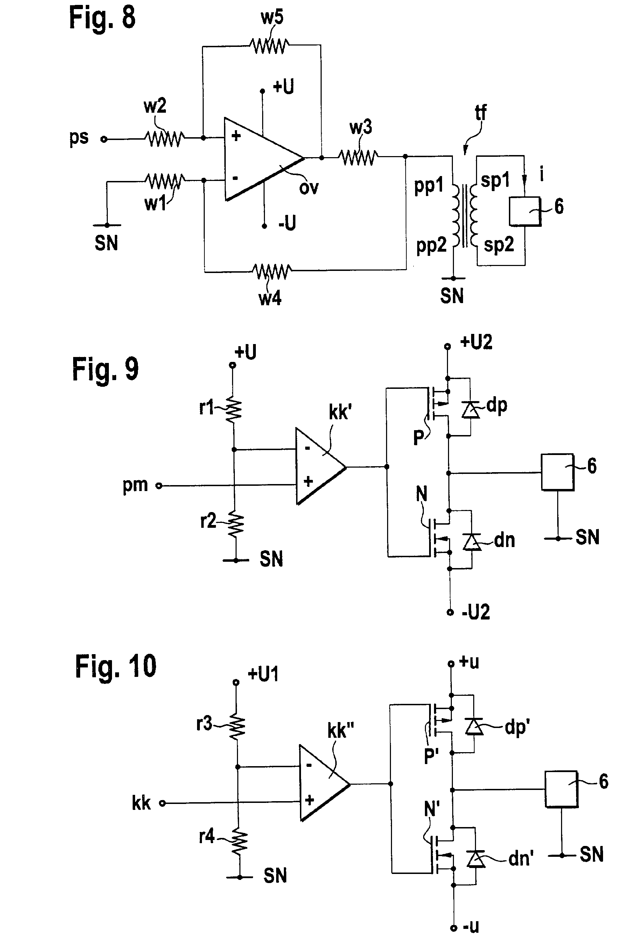

In Fig. 8 ist ein Schaltbild eines bevorzugten Ausführungsbeispiels einer Endstufe der Erregerschaltung der ersten Variante der Erfindung nach Fig. 5 dargestellt. Ein Operationsverstärker ov ist an einer positiven und an einer negativen, jeweils konstanten Gleichspannung +U, -U betrieben und wie folgt beschaltet. Ein invertierender Eingang liegt über einen ersten Widerstand w1 am Schaltungsnullpunkt SN und ein nicht-invertierender Eingang über einen zweiten Widerstand w2 am Ausgang des Multiplizierers m.

Ein Ausgang des Operationsverstärkers ov ist unter Zwischenschaltung eines dritten Widerstands w3 mit einem ersten Pol pp1 einer Primärwicklung eines Transformators tf verbunden; ein zweiter Pol pp2 der Primärwicklung liegt am Schaltungsnullpunkt SN. Der Transformator tf hat auch eine Sekundärwicklung, die mittels ihrer beiden Pole sp1, sp2 an der Erregeranordnung 6 angeschlossen ist.

Die Primärwicklung hat eine Primärwindungszahl N1 und die Sekundärwicklung eine Sekundärwindungszahl N2. Der Transformator tf ist ein Strom-Aufwärts-Transformator und hat ein Übersetzungsverhältnis N1/N2 von z.B. 20:1.

Der invertierende Eingang des Operationsverstärkers ov ist über einen vierten Widerstand w4 mit dem Ausgang verbunden. Der nicht-invertierende Eingang ist über einen fünften Widerstand w5 am ersten Pol pp1 der Primärwicklung angeschlossen.

Die fünf Widerstände w1, w2, w3, w4, w5 haben entsprechende Widerstandswerte R1, R2, R3, R4, R5. Der Widerstandswert R1 ist gleich dem Widerstandswert R2 und der Widerstandswert R4 ist gleich dem Widerstandswert R5 zu wählen. Der in der Erregeranordnung 6 fließende Wechselstrom i ergibt sich wie folgt, wenn die Ausgangsspannung des Multiplizierers m mit $u_m$ bezeichnet ist:

$$i = u_m \cdot \frac{R5}{R1} \cdot \frac{1}{R3} \cdot \frac{N1}{N2}$$

In Fig. 9 ist ein Schaltbild eines bevorzugten Ausführungsbeispiels einer Endstufe der Erregerschaltung der zweiten Variante der Erfindung nach Fig. 6 dargestellt. Der "Kern" der Endstufe, die eine komplementäre Gegentakt-Endstufe ist, ist eine Serienschaltung des gesteuerten Strompfads eines P-Kanal-Enhancement-Isolierschicht-Feldeffekt-Transistors P mit einem N-Kanal-Enhancement-Isolierschicht-Feldeffekt-Transistor N, die im Folgenden kurz als Transistoren bezeichnet sind.

Am Verbindungspunkt der gesteuerten Strompfade ist die Erregeranordnung 6 angeschlossen. Jedem gesteuerten Strompfad ist eine Schutzdiode dn, dp parallelgeschaltet, wobei die jeweilige Katode am positiveren Punkt des jeweiligen Transistors liegt.

Das p-transistor-seitige Ende der Serienschaltung liegt an einer konstanten positiven zweiten Gleichspannung +U2 und deren n-transistor-seitiges Ende an einer entsprechenden negativen Gleichspannung -U2. Die Gates der Transistoren N, P sind miteinander und mit einem Ausgang eines Komparators kk' verbunden. Der nicht-invertierende Eingang des Komparators kk' liegt am Ausgang des Pulsdauermodulators pm, vgl. Fig. 6.

Der invertierende Eingang des Komparators kk' ist mit einem Abgriff eines Spannungsteilers verbunden, der aus einem Widerstand r1 und einem Widerstand r2 besteht. Die Widerstände r1, r2 haben die gleichen Widerstandswerte und liegen zwischen der positiven Gleichspannung +U und dem Schaltungsnullpunkt SN. Die Widerstände r1, r2 und der Komparator kk' dienen der Symmetrierung des Ausgangssignals des Pulsdauermodulators pm bezüglich des halben Wertes der Gleichspannung +U.

Die Erregeranordnung 6 erhält somit bei jedem positiv gerichteten Nulldurchgang des Ausgangssignals des Sensors 7 bzw. der Summe der Ausgangssignale der Sensoren 7, 8 einen positiven Stromimpuls und bei jedem negativ gerichteten Nulldurchgang des Ausgangssignals des Sensors 7 bzw. der Summe der Ausgangssignale der Sensoren 7, 8 einen negativen Stromimpuls zugeführt. Die jeweilige Dauer dieser Stromimpulse stellt sich automatisch so ein, dass die durch das Referenzsignal Sr vorgegebene Schwingungsamplitude des Meßrohrs bzw. der Meßrohre 1, 2 erreicht wird.

In Fig. 10 ist ein Schaltbild eines bevorzugten Ausführungsbeispiels einer Endstufe der Erregerschaltung der dritten Variante der Erfindung nach Fig. 7 dargestellt.

Der "Kern" der Endstufe, die wieder eine komplementäre Gegentakt-Endstufe ist, ist auch hier wie in Fig. 9 eine Serienschaltung des gesteuerten Strompfads eines P-Kanal-Enhancement-Isolierschicht-Feldeffekt-Transistors P' mit einem N-Kanal-Enhancement-Isolierschicht-Feldeffekt-Transistor N', die im Folgenden wieder kurz als Transistoren bezeichnet sind.

Am Verbindungspunkt der gesteuerten Strompfade ist die Erregeranordnung 6 angeschlossen. Jedem gesteuerten Strompfad ist eine Schutzdiode dn', dp' parallelgeschaltet, wobei die jeweilige Katode am positiveren Punkt des jeweiligen Transistors liegt.

Das p-transistor-seitige Ende der Serienschaltung liegt an der vom Ausgangssignal der Stufe sa abhängigen positiven Gleichspannung +u und deren n-transistor-seitiges Ende an der vom Ausgangssignal der Stufe sa abhängigen negativen Gleichspannung -u. Die Gates der Transistoren N', P' sind miteinander und mit einem Ausgang eines Komparators kk'' verbunden. Der nicht-invertierende Eingang des Komparators kk'' liegt am Ausgang des Komparators kk, vgl. Fig. 7.

Der invertierende Eingang des Komparators kk'' ist mit einem Abgriff eines Spannungsteilers verbunden, der aus einem Widerstand r3 und einem Widerstand r4 besteht. Die Widerstände r3, r4 haben die gleichen Widerstandswerte und liegen zwischen der konstanten positiven ersten Gleichspannung +U1 und dem Schaltungsnullpunkt SN. Die Widerstände r3, r4 und der Komparator kk'' dienen der Symmetrierung des Ausgangssignals des Komparators kk bezüglich des halben Wertes der Gleichspannung +U1.

Die Erregeranordnung 6 erhält somit während jeder positiven Halbwelle des Ausgangssignals des Sensors 7 bzw. der Summe der Ausgangssignale der Sensoren 7, 8 einen positiven Stromimpuls und während jeder negativen Halbwelle des Ausgangssignals des Sensors 7 bzw. der Summe der Ausgangssignale der Sensoren 7, 8 einen negativen Stromimpuls zugeführt. Die jeweilige Amplitude dieser Stromimpulse ist von den vom Ausgangssignal der Stufe sa abhängigen Gleichspannungen +u, -u ihrerseits abhängig, sodass sich die durch das Referenzsignal Sr vorgegebene Schwingungsamplitude des Meßrohrs bzw. der Meßrohre 1, 2 automatisch einstellt.

Die erwähnten Gleichspannungen +U1, +U2, -U2 werden auf der Basis der von der Zwei-Leiter-Prozesskontroll-Schleife zur Verfügung gestellten Energie in üblicher Weise erzeugt. Es ist auch möglich, anstatt der beiden positiven Gleichspannungen +U1, +U2 nur eine einzige positive Gleichspannung vorzusehen.

Die erwähnte Zweidraht-Prozesskontroll-Schleife führt bei Erreger-Schaltung der Erfindung einerseits bevorzugt einen der Energieversorgung dienenden Gleichstrom, wobei insb. das Messsignal ebenfalls ein Gleichstrom ist, der z.B. standard-gemäß einen Bereich von 4 mA bis 20 mA umfasst. Andererseits kann das Messsignal auch bevorzugt ein Digitalsignal sein, sodass die Zweidraht-Prozesskontroll-Schleife an einen Feldbus angeschlossen werden kann.

Die Erregerschaltung der Erfindung stellt zusammen mit dem bzw. den Meßrohren 1, 2 einen Regelkreis dar, der sich elektrisch sowohl auf die mechanische Resonanzfrequenz der erregten Vibrationen des bzw. der Meßrohre 1, 2 als auch auf die mittels des Referenzsignals Sr vorgegebene Amplitude dieser Vibrationen einstellt.

Es sind daher die bisher üblichen Erregerschaltungen, die eine Amplitudenregelstufe und eine phasenverriegelte Schleife, eine sogenannte PLL, zur elektrischen Regelung der Resonanzfrequenz und der Vibrationsamplitude aufweisen, nicht erforderlich. Die bisherigen Erregerschaltungen sind nicht nur, was die Anzahl der erforderlichen Komponenten betrifft, sehr aufwendig, sondern sie benötigen auch weit mehr Versorgungsenergie, als bei Zwei-Draht-Meßgeräten zur Verfügung steht.

Die Erregerschaltung der Erfindung benötigt nur wenige Komponenten, die somit insgesamt auch nur eine praktisch vernachlässigbare Verlustleistung aufweisen, so dass die zur Verfügung stehende geringe Versorgungsenergie fast vollständig für die Erregung nutzbar ist.

**Patentansprüche**

1. Erreger-Schaltung für einen mit einer Zwei-Leiter-Prozesskontroll-Schleife verbundenen, allein davon mit Energie versorgten und allein darüber ein Messsignal abgebenden Coriolis-Massedurchflußmesser (10), der umfasst:

   - mindestens ein vibrierendes Meßrohr (1, 2),
   - eine elektromechanische Erregeranordnung (6) zum Vibrierenlassen des mindestens einen Meßrohrs bei einer Schwingfrequenz, die gleich der momentanen mechanischen Resonanzfrequenz des Meßrohrs oder dieser benachbart ist,
   - eine ein erstes Sensorsignal erzeugende erste Sensoranordnung (7), und
   - eine ein zweites Sensorsignal erzeugende zweite Sensoranordnung (8), welche Sensoranordnungen, entlang des Meßrohrs voneinander beabstandet angeordnet, dessen am Ort der jeweiligen Sensoranordnung auftretende Vibrationen erfassen,

   welche Erreger-Schaltung umfasst:

   - einen Spitzenwertdetektor (pd), dem als Eingangssignal eines der Sensorsignale bzw. deren Summe zugeführt ist,
   - eine Stufe (sa), die eine Abweichung eines Ausgangssignal des Spitzenwertdetektors von einem einstellbaren Referenzsignal (Sr) ermittelt, das eine Amplitude der Vibration des Meßrohrs vorgibt,
   - einen Multiplizierer (m) für das Eingangssignal des Spitzenwertdetektors (pd) und ein Ausgangssignal der Stufe (sa) sowie
   - eine die Erregeranordnung speisende Endstufe (ps), von der ein Eingang mit einem Ausgang des Multiplizierers verbunden ist.

2. Erreger-Schaltung nach Anspruch 1, bei der die Endstufe (ps) umfasst:

   - einen Operationsverstärker (ov), der wie folgt beschaltet ist:

     -- ein invertierender Eingang liegt über einen ersten Widerstand (w1) an einem Schaltungsnullpunkt (SN),
     -- ein nicht-invertierender Eingang liegt über einen zweiten Widerstand (w2), der den gleichen Widerstandswert wie der erste Widerstand hat, am Ausgang des Multiplizierers (m),

     -- ein Ausgang ist unter Zwischenschaltung eines dritten Widerstands (w3) mit einem ersten Pol (pp1) einer Primärwicklung eines Transformators (tf) verbunden, von der ein zweiter Pol (pp2) am Schaltungsnullpunkt (SN) liegt, welcher Transformator

        --- eine mit der elektromechanischen Erregeranordnung (6) verbundene Sekundärwicklung aufweist und
        --- ein Strom-Aufwärts-Transformator ist,

     -- der invertierende Eingang ist über einen vierten Widerstand (w4) mit dem Ausgang verbunden, und
     -- der nicht-invertierende Eingang ist über einen fünften Widerstand (w5), der den gleichen Widerstandswert wie der vierte Widerstand hat, am ersten Pol (pp1) der Primärwicklung angeschlossen.

3. Erreger-Schaltung für einen mit einer Zwei-Leiter-Prozesskontroll-Schleife verbundenen, allein davon mit Energie versorgten und allein darüber ein Messsignal abgebenden Coriolis-Massedurchflußmesser (10), der umfasst:

   - mindestens ein vibrierendes Meßrohr (1, 2),
   - eine elektromechanische Erregeranordnung (6) zum Vibrierenlassen des mindestens einen Meßrohrs bei einer Schwingfrequenz, die gleich der momentanen mechanischen Resonanzfrequenz des Meßrohrs oder dieser benachbart ist,
   - eine ein erstes Sensorsignal erzeugende erste Sensoranordnung (7), und
   - eine ein zweites Sensorsignal erzeugende zweite Sensoranordnung (8), welche Sensoranordnungen, entlang des Meßrohrs voneinander beabstandet angeordnet, dessen am Ort der jeweiligen Sensoranordnung auftretende Vibrationen erfassen, welche Erreger-Schaltung umfasst:

   - einen Spitzenwertdetektor (pd), dem als Eingangssignal eines der Sensorsignale bzw. deren Summe zugeführt ist,
   - eine Stufe (sa), die eine Abweichung eines Ausgangssignal des Spitzenwertdetektors von einem einstellbaren Referenzsignal (Sr) ermittelt, das eine Amplitude der Vibration des Meßrohrs vorgibt,
   - einen Pulsdauermodulator (pd), von dem

     -- einem ersten Eingang das Eingangssignal des Spitzenwertdetektors (pd) und einem zweiten Eingang ein Ausgangssignal der Stufe (sa) zugeführt sind, sowie

- eine die Erregeranordnung (6) speisende Endstufe (ps'), von der ein Eingang mit einem Aus-gang des Pulsdauermodulators (pd) verbun-den ist.

4. Erreger-Schaltung nach Anspruch 3, bei der die Endstufe eine komplementäre Gegentakt-Endstufe umfasst, die von einer konstanten positiven und einer konstanten negativen Gleichspannung (+U, -U) mit Energie versorgt ist.

5. Erreger-Schaltung für einen mit einer Zwei-Leiter-Prozesskontroll-Schleife verbundenen, allein davon mit Energie versorgten und allein darüber ein Messsignal abgebenden Coriolis-Massedurchflußmesser (10), der umfasst:

- mindestens ein vibrierendes Meßrohr (1, 2),
- eine elektromechanische Erregeranordnung (6) zum Vibrierenlassen des mindestens einen Meßrohrs bei einer Schwingfrequenz, die gleich der momentanen mechanischen Resonanzfrequenz des Meßrohrs oder dieser benachbart ist,
- eine ein erstes Sensorsignal erzeugende erste Sensoranordnung (7), und
- eine ein zweites Sensorsignal erzeugende zweite Sensoranordnung (8), welche Senso-ranordnungen, entlang des Meßrohrs vonein-ander beabstandet angeordnet, dessen am Ort der jeweiligen Sensoranordnung auftretende Vibrationen erfassen,

welche Erreger-Schaltung umfasst:

- einen Spitzenwertdetektor (pd), dem als Eingangssignal eines der Sensorsignale bzw. deren Summe zugeführt ist,
- eine Stufe (sa), die eine Abweichung eines Ausgangssignal des Spitzenwertdetektors von einem einstellbaren Referenzsignal (Sr) ermittelt, das eine Amplitude der Vibration des Meßrohrs vorgibt,
- einen eingangsseitig mit einem Ausgang der Stufe (sa) verbundenen Gleichspannungswandler (dc), der eine positive und eine negative, jeweils vom Ausgangssignal der Stufe abhängige Gleichspannung (+u, -u) abgibt,
- einen eingangsseitig mit dem Eingangssignal des Spitzenwertdetektors (pd) gespeisten Komparator (kk) und
- eine die Erregeranordnung (6) speisende Endstufe (ps"), von der ein Eingang mit einem Ausgang des Komparators verbunden ist und die von den vom Ausgangssignal der Stufe abhängigen Gleichspannungen (+u, -u) mit Energie versorgt ist.

6. Erreger-Schaltung nach Anspruch 5, bei der die Endstufe eine komplementäre Gegentakt-Endstufe umfasst, die von der vom Ausgangssignal der Stufe (sa) abhängigen positiven und der entsprechenden negativen Gleichspannung (+u, -u) mit Energie versorgt ist.

7. Erreger-Schaltung nach einem der Ansprüche 1, 3 oder 5 Anspruch 1, bei der dem Spitzenwertdetektor (pd) ein Vorverstärker (vv) vorgeschaltet ist.

8. Erreger-Schaltung nach einem der Ansprüche 1, 3 oder 5, bei der das Ausgangssignal der Stufe (sa) über einen Verstärker (v), über einen integrierenden Verstärker (vi) oder über einen differenzierenden und integrierenden Verstärker (vd) dem Multiplizierer (m) bzw. dem Pulsdauermodulator (pm) bzw. dem Komparator (kk) zugeführt ist.

9. Coriolis-Massedurchflußmesser mit einer Erreger-Schaltung nach einem der Ansprüche 1, 3 oder 5, bei dem die Zweidraht-Prozesskontroll-Schleife einen der Energieversorgung dienenden Gleichstrom führt.

10. Coriolis-Massedurchflußmesser mit einer Erreger-Schaltung nach Anspruch 9, bei dem das Messsignal ein Gleichstrom ist.

11. Coriolis-Massedurchflußmesser nach Anspruch 10, bei dem das Messsignal einen Bereich von 4 mA bis 20 mA umfasst.

12. Coriolis-Massedurchflußmesser mit einer Erreger-Schaltung nach einem der Ansprüche 1, 3 oder 5, bei dem das Messsignal ein Digitalsignal ist.

13. Coriolis-Massedurchflußmesser nach Anspruch 12, der mittels der Zweidraht-Prozesskontroll-Schleife an einem Feldbus angeschlossen ist.

Fig.1

**Fig. 2**

EP 1 271 111 A1

Fig. 4

Fig.3

14

Fig. 5

Fig. 6

Fig. 7

**Fig. 8**

**Fig. 9**

**Fig. 10**

| | Europäisches Patentamt | EUROPÄISCHER RECHERCHENBERICHT | Nummer der Anmeldung EP 01 11 4644 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 88 02476 A (MICRO MOTION INC) 7. April 1988 (1988-04-07) | 1,8-13 | G01F1/84 |
| A | * Seite 16, Zeile 5 - Seite 17, Zeile 13; Seite 33, Zeile 1 - Seite 35, Zeile 20; Seite 91, Zeile 12 - Seite 92, Zeile 24; Anspüche 7-9; Abbildungen 2 4 16 * | 2 | |
| X | US 5 869 770 A (KUDO TAKAHIRO ET AL) 9. Februar 1999 (1999-02-09) * Spalte 4, Zeile 66 - Spalte 5, Zeile 24; Abbildungen 6,7 * | 1,7 | |
| D,A | EP 1 094 307 A (KROHNE MESSTECHNIK KG) 25. April 2001 (2001-04-25) * Spalte 1, Zeile 41 - Spalte 2, Zeile 12 * | 1 | |

**RECHERCHIERTE SACHGEBIETE (Int.Cl.7)**

G01F

~~Der vorliegende Recherchenbericht wurde für alle Patentansprüche erstellt~~

| Recherchenort | Abschlußdatum der Recherche | Prüfer |
|---|---|---|
| DEN HAAG | 28. November 2001 | ROSE, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

Nummer der Anmeldung

EP 01 11 4644

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1, 2, 7-13

**Europäisches**
**Patentamt**

**MANGELNDE EINHEITLICHKEIT**
**DER ERFINDUNG**
**ERGÄNZUNGSBLATT B**

**Nummer der Anmeldung**

EP 01 11 4644

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1 2 7-13

   Erreger-Schaltung mit einem Multiplizierer, für einen Coriolis-Massedurchflussmesser

2. Anspruch : 3 4

   Erreger-Schaltung mit einem Pulsdauermodulator, für einen Coriolis-Massedurchflussmesser

3. Anspruch : 5 6

   Erreger-Schaltung mit einem Gleichspannungswandler und einem Komparator, für einen Coriolis-Massedurchflussmesser

**ANHANG ZUM EUROPÄISCHEN RECHERCHENBERICHT
ÜBER DIE EUROPÄISCHE PATENTANMELDUNG NR.**  EP 01 11 4644

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2001

| Im Recherchenbericht angeführtes Patentdokument | | Datum der Veröffentlichung | Mitglied(er) der Patentfamilie | | Datum der Veröffentlichung |
|---|---|---|---|---|---|
| WO 8802476 | A | 07-04-1988 | AU | 601501 B2 | 13-09-1990 |
| | | | AU | 8039287 A | 21-04-1988 |
| | | | BR | 8707826 A | 31-10-1989 |
| | | | DE | 3751349 D1 | 20-07-1995 |
| | | | DE | 3751349 T2 | 07-03-1996 |
| | | | EP | 0324783 A1 | 26-07-1989 |
| | | | JP | 2500214 T | 25-01-1990 |
| | | | JP | 5074008 B | 15-10-1993 |
| | | | WO | 8802476 A1 | 07-04-1988 |
| | | | US | 4911006 A | 27-03-1990 |
| US 5869770 | A | 09-02-1999 | JP | 3132628 B2 | 05-02-2001 |
| | | | JP | 8035873 A | 06-02-1996 |
| | | | CA | 2154312 A1 | 22-01-1996 |
| | | | EP | 0693676 A2 | 24-01-1996 |
| EP 1094307 | A | 25-04-2001 | DE | 19947698 A1 | 10-05-2001 |
| | | | CN | 1290852 A | 11-04-2001 |
| | | | EP | 1094307 A1 | 25-04-2001 |
| | | | JP | 2001153695 A | 08-06-2001 |

EPO FORM P0461

Für nähere Einzelheiten zu diesem Anhang : siehe Amtsblatt des Europäischen Patentamts, Nr.12/82